# EUROPEAN PATENT APPLICATION

(11) **EP 4 496 050 A1**
(43) Date of publication of application: **22.01.2025**
(21) Application number: 23803346.8
(22) Date of filing: 17.04.2023
(51) Int. Cl.: H01M 10/04, H01M 4/66, H01M 10/0585, H01M 50/204, H01M 50/489

(54) **POWER STORAGE DEVICE**

(30) Priority: 11.05.2022 JP 2022078266
(71) Applicant: KABUSHIKI KAISHA TOYOTA JIDOSHOKKI, Kariya-shi, Aichi 448-8671 (JP)
(72) Inventor: SAKAMOTO, Shunya, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: TBK
(86) International application number: PCT/JP2023/015333
(87) International publication number: WO 2023/218864

(57) **Abstract**

A power storage device includes: an electrode including: a current collector having a surface; and a positive active material layer provided on the surface of the current collector; and a sealing member provided on the surface of the current collector, the sealing member surrounding the positive active material layer in a stacking direction. The current collector includes: a first metal foil including the surface; a second metal foil provided opposite to the positive active material layer with respect to first metal foil; and an adhesive layer provided between the first metal foil and the second metal foil, the adhesive layer bonding the first metal foil and the second metal foil with each other. The sealing member includes: a seal portion welded to the surface; and another seal portion welded to a side face of the current collector including a side face of the adhesive layer. The heat-resistant temperature of the adhesive layer is higher than respective melting points of the seal portion and the other seal portion.

## Description

### Technical Field

The present disclosure relates to a power storage device.

### Background Art

Conventionally, a power storage device including a plurality of electrodes stacked in the stacking direction is known (see, for example, Patent Literature 1). Such an electrode as described above includes a positive current collector, a negative current collector, and an adhesive layer provided therebetween.

### Citation List

### Patent Literature

Patent Literature 1: Japanese Unexamined Patent Publication No. 2005-317468

### Summary of Invention

### Technical Problem

Meanwhile, such a power storage device as described above further includes a sealing member for sealing the side faces of a plurality of electrodes, and the sealing member is welded to the surface of an electrode in some cases. In such a case, heat in the welding of the sealing member to the electrode is transferred to an adhesive layer, so that the adhesion strength by the adhesive layer is reduced. Accordingly, the electrode may be damaged.

An object of the present invention is to provide a power storage device that enables inhibition of damage to an electrode.

### Solution to Problem

A power storage device according to the present disclosure includes: an electrode including: a current collector having a first main face; and an active material layer provided on the first main face; and a sealing member provided on a surface of the current collector, the sealing member surrounding the active material layer when viewed from a direction perpendicular to the first main face, in which the current collector includes: a first metal foil including the first main face; a second metal foil provided opposite to the active material layer with respect to the first metal foil; and an adhesive layer provided between the first metal foil and the second metal foil, the adhesive layer bonding the first metal foil and the second metal foil with each other, the sealing member includes: a first seal portion welded to the first main face; and a second seal portion welded to a side face of the current collector including a side face of the adhesive layer, and a heat-resistant temperature of the adhesive layer is higher than respective melting points of the first seal portion and the second seal portion.

In the power storage device, the current collector includes the adhesive layer that is provided between the first metal foil and the second metal foil and bonds the first metal foil and the second metal foil with each other. Further, the first seal portion is welded to the first main face of the first metal foil, and the second seal portion is welded to the side face of the current collector. Here, the heat-resistant temperature of the adhesive layer of the current collector is higher than the respective melting points of the first seal portion and the second seal portion. Thus, even if heat in welding of the first seal portion and the second seal portion to the current collector is transferred to the adhesive layer, a decrease in adhesion strength by the adhesive layer is inhibited. As a result, damage to the current collector due to a decrease in adhesion strength by the adhesive layer is inhibited. Therefore, the power storage device enables inhibition of damage to the electrode.

The power storage device may further include a spacer, in which a plurality of the electrodes may be stacked in a stacking direction, the spacer may be provided between the plurality of the electrodes adjacent to each other in the stacking direction, the spacer may be welded to the sealing member, and the heat-resistant temperature of the adhesive layer may be higher than a melting point of the spacer. With this arrangement, even if heat in welding of the spacer to the sealing member is transferred to the adhesive layer, a decrease in adhesion strength by the adhesive layer is inhibited. Therefore, damage to the current collector due to a decrease in adhesion strength by the adhesive layer is inhibited, and as a result, damage to the electrodes is inhibited.

The current collector has a second main face opposite to the first main face, the sealing member may further include a third seal portion welded to the second main face, and the heat-resistant temperature of the adhesive layer may be higher than a melting point of the third seal portion. With this arrangement, even if heat in welding of the third seal portion to the current collector is transferred to the adhesive layer, a decrease in adhesion strength by the adhesive layer is inhibited. Therefore, damage to the current collector due to a decrease in adhesion strength by the adhesive layer is inhibited, and as a result, damage to the electrodes is inhibited.

The adhesive layer may contain a thermosetting resin, and the sealing member may contain a thermoplastic resin. Accordingly, use of the thermosetting resin as a component of the adhesive layer results in an increase of the heat-resistant temperature of the adhesive layer, and use of the thermoplastic resin as a component of the sealing member results in an increase of sealing performance by the sealing member.

The current collector may further include a carbon coat layer provided at least either between the first metal foil and the adhesive layer or between the second metal foil and the adhesive layer. With this arrangement, the adhesion strength between the first metal foil and the adhesive layer and the adhesion strength between the second metal foil and the adhesive layer can be reliably secured.

### Advantageous Effects of Invention

According to the present disclosure, provided can be a power storage device that enables inhibition of damage to an electrode.

### Brief Description of Drawings

FIG. 1 is a schematic sectional view of a power storage device according to an embodiment.
FIG. 2 is a partially enlarged view of FIG. 1.
FIG. 3 is a view of steps of a method for manufacturing the power storage device illustrated in FIG. 1.
FIG. 4 is a view of steps of the method for manufacturing the power storage device illustrated in FIG. 1.
FIG. 5 is view of steps of the method for manufacturing the power storage device illustrated in FIG. 1.
FIG. 6 is a view of steps of the method for manufacturing the power storage device illustrated in FIG. 1.
FIG. 7 is a partially enlarged view of a power storage device according to a modification.

### Description of Embodiments

Hereinafter, embodiments of the present disclosure will be described in detail with reference to the drawings. Note that in the drawings, the same or corresponding parts are denoted by the same reference signs, and the redundant description will be omitted.

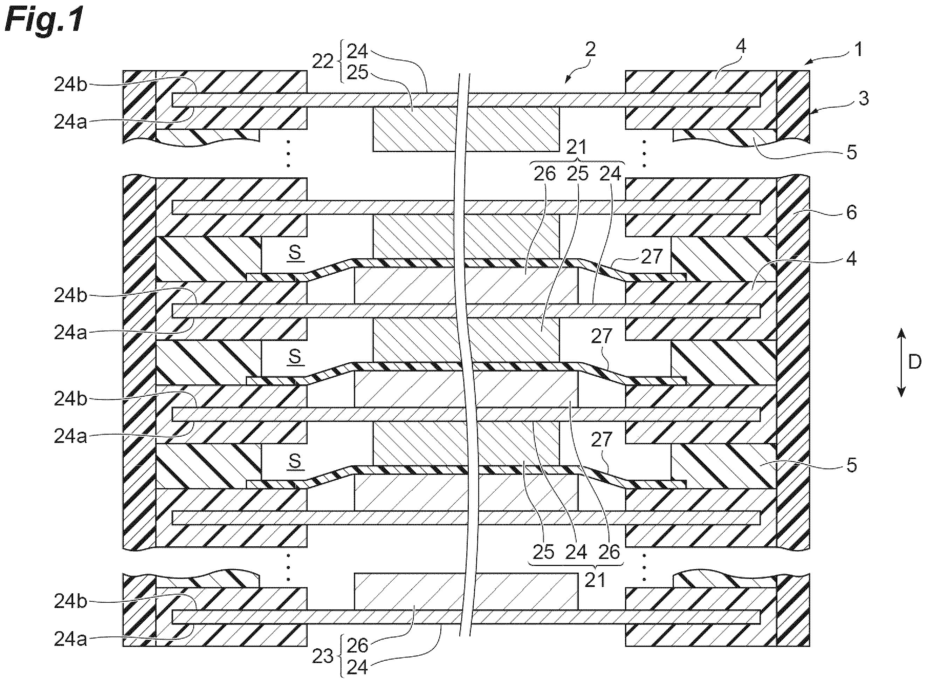

A power storage device 1 illustrated in FIG. 1 is, for example, a power storage module to be used for a battery of a forklift, a hybrid vehicle, or an electric vehicle. The power storage device 1 is, for example, a secondary battery such as a nickel-metal hydride secondary battery or a lithium ion secondary battery. In the present embodiment, the power storage device 1 is a lithium ion secondary battery.

As illustrated in FIG. 1, the power storage device 1 includes a stack 2 and a seal 3. The stack 2 includes a plurality of bipolar electrodes 21 stacked in the stacking direction D, a positive terminal electrode 22, and a negative terminal electrode 23. The stack 2 is formed by stacking the plurality of bipolar electrodes 21 between the positive terminal electrode 22 and the negative terminal electrode 23. Such a bipolar electrode 21 as described above includes a current collector 24, a positive active material layer 25, and a negative active material layer 26.

The current collector 24 is, for example, rectangular when viewed from the stacking direction D. The current collector 24 has a first main face 24a as one surface and a second main face 24b as the other surface opposite to the first main face 24a. That is, the current collector 24 has the first main face 24a and the second main face 24b opposite to each other in the stacking direction D. The positive active material layer 25 is provided on the first main face 24a of the current collector 24. The positive active material layer 25 is, for example, rectangular when viewed from the stacking direction D. The first main face 24a of the current collector 24 includes a non-coated region where the positive active material layer 25 is not provided. The non-coated region surrounds the positive active material layer 25 when viewed from the stacking direction D.

The negative active material layer 26 is provided on the second main face 24b of the current collector 24. The negative active material layer 26 is, for example, rectangular when viewed from the stacking direction D. The second main face 24b of the current collector 24 includes a non-coated region where the negative active material layer 26 is not provided. The non-coated region surrounds the negative active material layer 26 when viewed from the stacking direction D. The plurality of bipolar electrodes 21 is stacked such that the positive active material layer 25 of one bipolar electrode 21 and the negative active material layer 26 of the other bipolar electrode 21 adjacent to each other in the stacking direction D are opposite to each other. That is, the plurality of bipolar electrodes 21 is stacked such that, of the bipolar electrodes 21 adjacent to each other in the stacking direction D, the first main face 24a of the current collector 24 of one bipolar electrode 21 and the second main face 24b of the current collector 24 of the other bipolar electrode 21 are opposite to each other.

The positive terminal electrode 22 is stacked and disposed at one end of the plurality of bipolar electrodes 21 in the stacking direction D. The positive terminal electrode 22 includes a current collector 24 and a positive active material layer 25 provided on a first main face 24a that the current collector 24 has. The positive terminal electrode 22 is different from such a bipolar electrode 21 as described above in that a negative active material layer 26 is not provided on a second main face 24b that the current collector 24 has. Note that a positive active material layer 25 or a negative active material layer 26 is not provided on the second main face 24b of the current collector 24 of the positive terminal electrode 22. The second main face 24b of the current collector 24 of the positive terminal electrode 22 serves as a positive terminal face that the power storage device 1 has. Other configurations of the positive terminal electrode 22 may be the same as those of the bipolar electrode 21. The positive terminal electrode 22 is disposed such that the positive active material layer 25 of the positive terminal electrode 22 is opposite to the negative active material layer 26 of the bipolar electrode 21. That is, the positive terminal electrode 22 is stacked such that the first main face 24a of the current collector 24 of the positive terminal electrode 22 and the second main face 24b of the current collector 24 of the bipolar electrode 21 adjacent to the positive terminal electrode 22 in the stacking direction D are opposite to each other.

The negative terminal electrode 23 is disposed opposite to the positive terminal electrode 22 with respect to the plurality of bipolar electrodes 21. That is, the positive terminal electrode 22 is stacked and disposed at the one end of the plurality of bipolar electrodes 21 in the stacking direction D, and the negative terminal electrode 23 is stacked and disposed at the other end of the plurality of bipolar electrodes 21 in the stacking direction D. The negative terminal electrode 23 includes a current collector 24 and a negative active material layer 26 provided on a second main face 24b that the current collector 24 has. The negative terminal electrode 23 is different from such a bipolar electrode 21 as described above in that a positive active material layer 25 is not provided on a first main face 24a that the current collector 24 has. Note that a positive active material layer 25 or a negative active material layer 26 is not provided on the first main face 24a of the current collector 24 of the negative terminal electrode 23. The first main face 24a of the current collector 24 of the negative terminal electrode 23 serves as a negative terminal face that the power storage device 1 has. Other configurations of the negative terminal electrode 23 may be the same as those of the bipolar electrode 21. The negative terminal electrode 23 is disposed such that the negative active material layer 26 of the negative terminal electrode 23 is opposite to the positive active material layer 25 of the bipolar electrode 21. That is, the negative terminal electrode 23 is stacked such that the second main face 24b of the current collector 24 of the negative terminal electrode 23 and the first main face 24a of the current collector 24 of the bipolar electrode 21 adjacent to the negative terminal electrode 23 in the stacking direction D are opposite to each other. Each internal space S containing an electrolytic solution is formed between the bipolar electrodes 21 adjacent to each other, between the bipolar electrode 21 and the positive terminal electrode 22 adjacent to each other, and between the bipolar electrode 21 and the negative terminal electrode 23 adjacent to each other in the stacking direction D.

The stack 2 includes a plurality of separators 27. Each of the separators 27 is disposed between the bipolar electrodes 21 adjacent to each other, between the bipolar electrode 21 and the positive terminal electrode 22 adjacent to each other, and between the bipolar electrode 21 and the negative terminal electrode 23 adjacent to in the stacking direction D. Such a separator 27 as described above is located between the positive active material layer 25 and the negative active material layer 26 opposite to each other. The separator 27 is, for example, sheet-like. The separator 27 is, for example, rectangular when viewed from the stacking direction D. When viewed from the stacking direction D, the separator 27 has an outer edge located outside an outer edge that the positive active material layer 25 has and an outer edge that the negative active material layer 26 has. The separator 27 has a peripheral edge located between a sealing member 4 and a spacer 5 described later. The separator 27 is a member that allows a charge carrier such as a lithium ion to pass therethrough. Each of such separators 27 as described above isolates the bipolar electrodes 21 adjacent to each other, the bipolar electrode 21 and the positive terminal electrode 22 adjacent to each other, and the bipolar electrode 21 and the negative terminal electrode 23 adjacent each other in the stacking direction D. This arrangement prevents an electrical short circuit due to contact between the bipolar electrodes 21 adjacent to each other, between the bipolar electrode 21 and the positive terminal electrode 22 adjacent each other, and between the bipolar electrode 21 and the negative terminal electrode 23 adjacent each other in the stacking direction D.

The current collector 24 is a chemically inert electric conductor for continuously flowing a current to the positive active material layer 25 and the negative active material layer 26 during discharge or charge of the power storage device 1. The current collector 24 may be, for example, plate-like, foil-like, sheet-like, film-like, or mesh-like, for example. When the current collector 24 is foil-like, the thickness of the current collector 24 may be within a range of 1 µm or more and 100 µm or less. A coated layer may be formed on the surface of the current collector 24 by a known method such as plating or spray coating. Note that for example, among such current collectors 24 as described above of the bipolar electrodes 21, the positive terminal electrode 22, and the negative terminal electrode 23, some of the current collectors 24 may have a thickness of 100 µm or more. In this case, the structural stability of the stack 2 is enhanced.

The positive active material layer 25 contains a positive active material capable of occluding and releasing a charge carrier such as a lithium ion. Examples of the positive active material include a composite oxide, lithium metal, and sulfur. The composition of the composite oxide includes, for example, at least one of iron, manganese, titanium, nickel, cobalt, and aluminum, and lithium. Examples of the composite oxide include olivine type lithium iron phosphate (LiFePO₄), LiCoO₂, and LiNiMnCoO₂.

The negative active material layer 26 contains a negative active material capable of occluding and releasing a charge carrier such as a lithium ion. Examples of the negative active material include carbon such as graphite, artificial graphite, highly oriented graphite, mesocarbon microbeads, hard carbon, and soft carbon; metal compounds; elements capable of being alloyed with lithium or compounds thereof; and boron-added carbon. Examples of the elements capable of being alloyed with lithium include silicon (silicon) and tin.

Each of the positive active material layer 25 and the negative active material layer 26 may contain a binder and a conductive auxiliary in addition to such an active material as described above. The binder plays a role of connecting the active material or the conductive auxiliary to each other and maintaining the conductive network in the electrode. Examples of the binder include fluorine-containing resins such as polyvinylidene difluoride, polytetrafluoroethylene, and fluoroelastomer; thermoplastic resins such as polypropylene and polyethylene; imide resins such as polyimide and polyamideimide; alkoxysilyl group-containing resins; acrylic resins such as polyacrylic acid and polymethacrylic acid; styrenebutadiene rubber; carboxymethyl cellulose; alginates such as sodium alginate and ammonium alginate; water-soluble cellulose ester crosslinked products; and starch-acrylic acid graft polymers. These binders can be used alone or in combination. The conductive auxiliary is, for example, a conductive material such as acetylene black, carbon black, or graphite, and can enhance electrical conductivity. As a viscosity modifying solvent, N-methyl-2-pyrrolidone is used, for example.

For formation of the positive active material layer 25 on the first main face 24a and formation of the negative active material layer 26 on the second main face 24b, for example, used is a known method such as roll coating, die coating, dip coating, doctor blading, spray coating, or curtain coating. Specifically, an active material, a solvent, and if necessary, a binder and a conductive auxiliary are mixed to produce a slurry-like active material layer forming composition, the active material layer forming composition is applied to the first main face 24a or the second main face 24b, and then the applied active material layer forming composition is dried to obtain the positive active material layer 25 or the negative active material layer 26. The solvent is, for example, N-methyl-2-pyrrolidone, methanol, methyl isobutyl ketone, or water. In order to increase the electrode density, the dried positive active material layer 25 or the dried negative active material layer 26 may be further compressed.

The separator 27 is, for example, a porous sheet or a nonwoven fabric containing a polymer that absorbs and holds an electrolyte. The material of the separator 27 is, for example, polypropylene, polyethylene, polyolefin, or polyester. The separator 27 may have a single layer structure or a multilayer structure. When the separator 27 has a multilayer structure, the separator 27 may include, for example, a base layer and a pair of adhesive layers, and may be adhesively fixed to the positive active material layer 25 and the negative active material layer 26 by the pair of adhesive layers. The separator 27 may include a ceramic layer serving as a heat resistant layer. The separator 27 may be reinforced with a vinylidene difluoride resin compound.

Examples of the electrolyte with which the separator 27 is impregnated include a liquid electrolyte (electrolytic solution) containing a nonaqueous solvent and an electrolyte salt dissolved in the nonaqueous solvent, or a polymer gel electrolyte containing an electrolyte held in a polymer matrix. In a case where the separator 13 is impregnated with an electrolyte, a known lithium salt such as LiClO₄, LiAsF₆, LiPF₆, LiBF₄, LiCF₃SO₃, LiN(FSO₂)₂, or LiN(CF₃SO₂)₂ can be used as the electrolyte salt. As the nonaqueous solvent, a known solvent such as cyclic carbonates, cyclic esters, chain carbonates, chain esters, or ethers can be used. Note that two or more of these known solvent materials may be used in combination. In the present embodiment, the electrolyte with which the separator 27 is impregnated is an electrolytic solution.

The seal 3 is a member that seals the internal spaces S. The seal 3 is provided on a side face of the stack 2. The seal 3 seals the side face of the stack 2. The seal 3 has, for example, a rectangular cylindrical shape. The seal 3 is electrically insulative. The seal 3 includes a plurality of the sealing members 4, a plurality of the spacers 5, and a welded portion 6.

Each sealing member 4 is provided on the surface of the corresponding current collector 24 and surrounds the corresponding positive active material layer 25 and the corresponding negative active material layer 26 when viewed from the stacking direction D (direction perpendicular to the first main face 24a). Each spacer 5 is provided between the bipolar electrodes 21 adjacent to each other, between the bipolar electrode 21 and the positive terminal electrode 22 adjacent to each other, and between the bipolar electrode 21 and the negative terminal electrode 23 adjacent each other in the stacking direction D. The spacer 5 has, for example, a rectangular frame shape when viewed from the stacking direction D. The welded portion 6 has, for example, a rectangular cylindrical shape. The welded portion 6 reaches both ends of the stack 2 in the stacking direction D. The welded portion 6 is integrated by welding the respective outer edges of the sealing members 4 and the spacers 5.

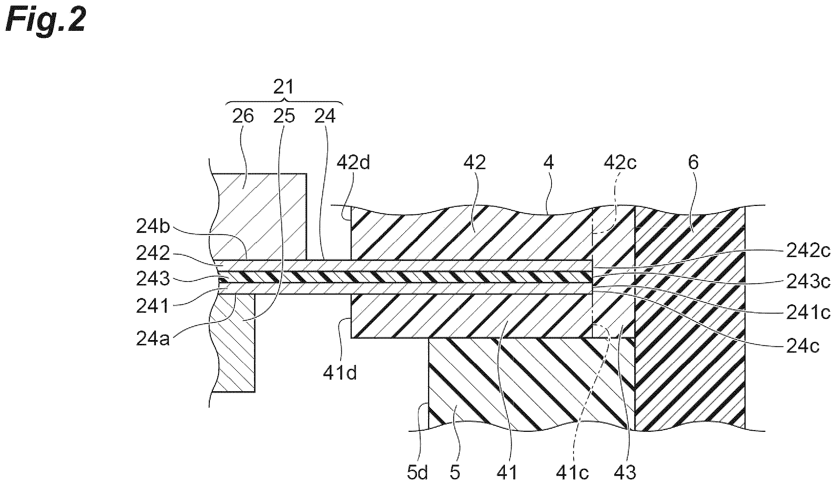

Hereinafter, a description will be given focusing on a single electrode (e.g., a single bipolar electrode 21) with reference to FIG. 2. As illustrated in FIG. 2, a current collector 24 includes a first metal foil 241, a second metal foil 242, and an adhesive layer 243. The first metal foil 241 has one surface as a first main face 24a. That is, a positive active material layer 25 is provided on the one surface of the first metal foil 241 as the first main face 24a of the current collector 24. The first metal foil 241 is, for example, rectangular when viewed from the stacking direction D. The first metal foil 241 is, for example, an aluminum foil. The first metal foil 241 may be, for example, a nickel foil, a titanium foil, or a stainless steel foil. The first metal foil 241 may be an alloy foil or a clad foil of two or more metals among the metals described above.

The second metal foil 242 is provided opposite to the positive active material layer 25 with respect to first metal foil 241. The second metal foil 242 has one surface as a second main face 24b. That is, a negative active material layer 26 is provided on the one surface of the second metal foil 242 as the second main face 24b of the current collector 24. The second metal foil 242 is, for example, rectangular when viewed from the stacking direction D. When viewed from stacking direction D, a side face (outer edge) 242c that the second metal foil 242 has is substantially aligned with a side face (outer edge) 241c that the first metal foil 241 has. In the present embodiment, the second metal foil 242 is, for example, a copper foil. The second metal foil 242 may be, for example, a nickel foil, a titanium foil, or a stainless steel foil. The second metal foil 242 may be an alloy foil or a clad foil of two or more metals among the metals described above.

The adhesive layer 243 is provided between the first metal foil 241 and the second metal foil 242. The adhesive layer 243 is, for example, rectangular when viewed from the stacking direction D. When viewed from the stacking direction D, a side face (outer edge) 243c that the adhesive layer 243 has is substantially aligned with the side face 241c of the first metal foil 241 and the side face 242c of the second metal foil 242. The side face 241c, the side face 242c, and the side face 243c are constituents of a side face (outer edge) 24c that the current collector 24 has.

The adhesive layer 243 bonds the first metal foil 241 and the second metal foil 242 with each other. The adhesive layer 243 is joined to the first metal foil 241 and the second metal foil 242. The adhesive layer 243 is conductive. The adhesive layer 243 contains, for example, a conductive resin material. Examples of the conductive resin material include a conductive polymer material or a resin resulting from adding of a conductive filler to a non-conductive polymer material.

In the present embodiment, the adhesive layer 243 contains an adhesive component and a conductive component. The adhesive component functions as an adhesive for bonding the first metal foil 241 and the second metal foil 242 with each other. The adhesive component is, for example, a thermosetting resin. The adhesive component contains, for example, a resin and a curing agent mixed with the resin. The resin of the adhesive component is, for example, an olefin-based resin. Specifically, the resin of the adhesive component is, for example, polypropylene or polyethylene. The curing agent of the adhesive component is, for example, an isocyanate-based curing agent or an epoxy-based curing agent. In order to join two metal foils by an adhesive layer containing an olefin-based resin as an adhesive component, an epoxy-based curing agent that generates less gas due to a curing reaction of the adhesive component can be suitably used. The conductive component electrically connects the first metal foil 241 and the second metal foil 242. The conductive component is, for example, conductive particles dispersed in the adhesive component. The conductive particles are, for example, graphite particles or metal particles. As the conductive particles, for example, spherical particles each having a metal film formed on the surface of a core particle such as a resin or ceramic can also be used.

The sealing member 4 includes a first seal portion 41, a third seal portion 42, and a second seal portion 43. The first seal portion 41 is provided on the first main face 24a. The first seal portion 41 has, for example, a rectangular frame shape when viewed from the stacking direction D. The first seal portion 41 surrounds the positive active material layer 25 and the negative active material layer 26 when viewed from the stacking direction D. The first seal portion 41 is provided in a non-coated region on the first main face 24a of the current collector 24. The first seal portion 41 has an outer edge 41c substantially aligned with the side face 24c of the current collector 24 when viewed from the stacking direction D. The first seal portion 41 has an inner edge 41d separated from the positive active material layer 25. When viewed from the stacking direction D, the first main face 24a of the current collector 24 is exposed to the internal space S between the positive active material layer 25 and the inner edge 41d of the first seal portion 41. The first seal portion 41 is welded to the first main face 24a.

The third seal portion 42 is provided on the second main face 24b. The third seal portion 42 has, for example, a rectangular frame shape when viewed from the stacking direction D. The third seal portion 42 surrounds the positive active material layer 25 and the negative active material layer 26 when viewed from the stacking direction D. The third seal portion 42 is provided in a non-coated region on the second main face 24b of the current collector 24. The third seal portion 42 has an outer edge 42c substantially aligned with the side face 24c of the current collector 24 when viewed from the stacking direction D. The third seal portion 42 has an inner edge 42d separated from the negative active material layer 26. When viewed from the stacking direction D, the second main face 24b of the current collector 24 is exposed to the internal space S between the negative active material layer 26 and the third seal portion 42. The inner edge 42d of the third seal portion 42 is substantially aligned with the inner edge 41d of the first seal portion 41 when viewed from the stacking direction D. The third seal portion 42 is substantially the same in thickness as the first seal portion 41. The third seal portion 42 is welded to the second main face 24b.

The second seal portion 43 is provided on the side face 24c of the current collector 24. The second seal portion 43 is located outside the side face 24c of the current collector 24, the outer edge 41c of the first seal portion 41, and the outer edge 42c of the third seal portion 42. The second seal portion 43 is connected to the first seal portion 41 and the third seal portion 42. The second seal portion 43 covers the side face 24c of the current collector 24. The second seal portion 43 covers the side face 241c of the first metal foil 241, the side face 242c of the second metal foil 242, and the side face 243c of the adhesive layer 243.

The second seal portion 43 may be welded to the side face 24c of the current collector 24. For example, the second seal portion 43 may be welded to the side face 241c of the first metal foil 241, the side face 242c of the second metal foil 242, and the side face 243c of the adhesive layer 243. The second seal portion 43 seals the side face 24c of the current collector 24. Each of the first seal portion 41, the third seal portion 42, and the second seal portion 43 is a partial region of a sealing member 4 integrally formed of the same material.

A spacer 5 is provided between such sealing members 4 as described above adjacent to each other in the stacking direction D. The spacer 5 has, for example, a rectangular frame shape. An inner edge 5d that the rectangular frame-shaped spacer 5 has may be farther from the positive active material layer 25 or the negative active material layer 26 than each of the inner edge 41d of the rectangular frame-shaped first seal portion 41 and the inner edge 42d of the rectangular frame-shaped third seal portion 42 is when viewed from the stacking direction D. In the present embodiment, when viewed from the stacking direction D, the inner edge 41d of the first seal portion 41 is located between the positive active material layer 25 and the inner edge 5d of the spacer 5, and the inner edge 42d of the third seal portion 42 is located between the negative active material layer 26 and the inner edge 5d of the spacer 5. The spacer 5 is different in member from such a sealing member 4 as described above. Note that the inner edge 5d of the spacer 5 may be closer to the positive active material layer 25 or the negative active material layer 26 than each of the inner edge 41d of the first seal portion 41 and the inner edge 42d of the third seal portion 42 is when viewed from the stacking direction D.

The spacer 5 is sandwiched between a pair of such sealing members 4 as described above adjacent to each other in the stacking direction D. The spacer 5 is in contact with the sealing members 4. The spacer 5 forms an internal space S for containing an electrolytic solution, with each other with a pair of such bipolar electrodes 21 as described above adjacent to each other in the stacking direction D and the pair of sealing members 4 adjacent to each other in the stacking direction D. Note that a filling port for filling the electrolytic solution into the internal space S is provided to the spacer 5.

The thickness of the spacer 5 in the stacking direction D may be larger than the thickness of each of the first seal portion 41 and the third seal portion 42. The thickness of the spacer 5 is, for example, twice or more the thickness of the first seal portion 41 or the thickness of the third seal portion 42. That is, the thickness of the spacer 5 may be smaller than the sum of the thickness of the first metal foil 241, the thickness of the second metal foil 242, the thickness of the adhesive layer 243, the thickness of the first seal portion 41, and the thickness of the third seal portion 42.

The spacer 5 is welded to such a sealing member 4 as described above on the outer side (welded portion 6) of the side face 24c of the current collector 24. Specifically, the respective outer edges of such sealing members 4 as described above and such spacers 5 as described above are melted and then resolidified to form the welded portion 6. That is, the outer edges of the sealing members 4 and the spacer 5 are mutually welded to form the welded portion 6. That is, in the welded portion 6, a region having a predetermined width from the outer edge of each spacer 5 is welded to a region having a predetermined width from the outer edge of the corresponding sealing member 4. In the welded portion 6, the spacer 5 and the sealing member 4 are compatible with each other.

The outer edge of the sealing member 4 is a portion of the sealing member 4 that is located opposite to the current collector 24 and is closer to the second seal portion 43 than the current collector 24 is. The outer edge of the sealing member 4 is a portion to be welded between the sealing member 4 and the spacer 5. The outer edge of the spacer 5 is a portion of the spacer 5 that overlaps the outer edge of the sealing member 4 when viewed from the stacking direction D. The outer edge of the spacer 5 is a portion to be welded between the sealing member 4 and the spacer 5. In the present embodiment, the welded portion 6 does not reach the side face 24c of the current collector 24. The welded portion 6 may reach the side face 24c of the current collector 24. Note that a filling port in communication with the filling port of the spacer 5 is provided to the welded portion 6.

The sealing member 4 and the spacer 5 each contain a thermoplastic resin. The material of each of the sealing member 4 and the spacer 5 is, for example, acid-modified polyethylene (acid-modified PE), acid-modified polypropylene (acid-modified PP), polyethylene, or polypropylene. The sealing member 4 and the spacer 5 are each electrolyte resistant. The materials of the sealing member 4 and the spacer 5 may be the same or different from each other. In the present embodiment, the material of the sealing member 4 is, for example, acid-modified polyethylene or acid-modified polypropylene. In the present embodiment, the material of the spacer 5 is, for example, polyethylene or polypropylene.

Acid-modified polyethylene and acid-modified polypropylene are easily bonded to metal as compared with non-acid-modified polyethylene and non-acid-modified polypropylene. That is, acid-modified polyethylene and acid-modified polypropylene are resin materials higher in adhesiveness to metal than non-acid-modified polyethylene and non-acid-modified polypropylene. The material of each of the first metal foil 241 and the second metal foil 242 of the current collector 24 is metal. Thus, the first seal portion 41, the third seal portion 42, and the second seal portion 43 each contain acid-modified polyethylene or acid-modified polypropylene, resulting in improvement of the joining strength of each of the first seal portion 41, the third seal portion 42, and the second seal portion 43 to the first metal foil 241 or the second metal foil 242.

The heat-resistant temperature of the adhesive layer 243 (hereinafter, may be simply referred to as "heat-resistant temperature") is higher than the respective melting points of the first seal portion 41, the third seal portion 42, the second seal portion 43, and the spacer 5. Specifically, the heat-resistant temperature of the adhesive component of the adhesive layer 243 is higher than the respective melting points of the first seal portion 41, the third seal portion 42, the second seal portion 43, and the spacer 5. The melting points of the first seal portion 41, the third seal portion 42, the second seal portion 43, and the spacer 5 are each lower than 150 degrees, for example. The heat-resistant temperature of the adhesive layer 243 is, for example, 150 degrees or higher.

The heat-resistant temperature of the adhesive layer 243 is a limit temperature at which a favorable adhesion state between the first metal foil 241 and the second metal foil 242 is maintained. Specifically, the heat-resistant temperature of the adhesive layer 243 is a limit temperature at which the adhesion strength between the first metal foil 241 and the second metal foil 242 by the adhesive layer 243 is a predetermined threshold or larger. The predetermined threshold may be, for example, 1% of the adhesion strength of the adhesive layer 243 at room temperature. In typical, as the temperature of the adhesive layer 243 is increased by heating, the adhesion strength of the adhesive layer 243 tends to be lower than that before heating. As the temperature of the adhesive layer 243 becomes higher than the heat-resistant temperature, the adhesion strength of the adhesive layer 243 decreases to a value lower than the predetermined threshold. When the adhesion strength of the adhesive layer 243 is smaller than the predetermined threshold, a favorable adhesion state between the first metal foil 241 and the second metal foil 242 is not maintained, so that the current collector 24 may be damaged. In the present embodiment, the heat-resistant temperature of the adhesive layer 243 is higher than the melting points of the first seal portion 41, the third seal portion 42, the second seal portion 43, and the spacer 5. Thus, in welding of the first seal portion 41, the third seal portion 42, the second seal portion 43, or the spacer 5, even if the temperature of the adhesive layer 243 reaches the melting point of the first seal portion 41, the melting point of the third seal portion 42, the melting point of the second seal portion 43, or the melting point of the spacer 5, the current collector 24 is hardly damaged. Examples of the damage of the current collector 24 include peeling of the first metal foil 241 or the second metal foil 242, a change in the relative position between the first metal foil 241 and the second metal foil 242 (positional displacement between the first metal foil 241 and the second metal foil 242), and deformation (e.g., wrinkle) of the first metal foil 241 or the second metal foil 242.

In the present embodiment, the adhesion strength of the adhesive layer 243 heated to the heat-resistant temperature (hereinafter, referred to as "high-temperature strength") is 1% or larger of the adhesion strength of the adhesive layer 243 at room temperature (hereinafter, referred to as "room-temperature strength"). When the adhesion strength of the heated adhesive layer 243 is 1% or larger of the room-temperature strength, a favorable adhesion state between the first metal foil 241 and the second metal foil 242 by the adhesive layer 243 is maintained. That is, when the temperature of the adhesive layer 243 is equal to or lower than the heat-resistant temperature, the adhesion strength of the adhesive layer 243 is 1% or larger of the room-temperature strength, and thus the favorable adhesion state between the first metal foil 241 and the second metal foil 242 is maintained. In the present embodiment, the heat-resistant temperature of the adhesive layer 243 is higher than the melting points of the first seal portion 41, the third seal portion 42, the second seal portion 43, and the spacer 5. Thus, in welding of the first seal portion 41, the third seal portion 42, the second seal portion 43, or the spacer 5, even if the temperature of the adhesive layer 243 reaches the melting point of the first seal portion 41, the melting point of the third seal portion 42, the melting point of the second seal portion 43, or the melting point of the spacer 5, the adhesion strength of the adhesive layer 243 is 1% or larger of the room-temperature strength. That is, even if the temperature of the adhesive layer 243 reaches the melting point of the first seal portion 41, the melting point of the third seal portion 42, the melting point of the second seal portion 43, or the melting point of the spacer 5, a favorable adhesion state between the first metal foil 241 and the second metal foil 242 by the adhesive layer 243 is maintained, so that the current collector 24 is hardly damaged.

The room-temperature strength is measured, for example, as follows. That is, first, a current collector 24 (a current collector 24 provided with none of a positive active material layer 25, a negative active material layer 26, and a sealing member 4) is prepared. Next, at room temperature, for example, by a 180-degree peeling strength test (in accordance with JIS Z 0237:2009 as an example), the peeling strength when a first metal foil 241 is peeled off from a second metal foil 242 is measured as a room-temperature strength. The high-temperature strength is measured, for example, as follows. That is, first, similarly to the measurement of the room-temperature strength, a current collector 24 is prepared. Next, the current collector 24 is heated to the heat-resistant temperature of an adhesive layer 243. Next, with the temperature of the current collector 24 heated to the heat-resistant temperature of the adhesive layer 243 maintained, the peeling strength when a first metal foil 241 is peeled off from a second metal foil 242 is measured as a high-temperature strength, similarly to the measurement of the room-temperature strength.

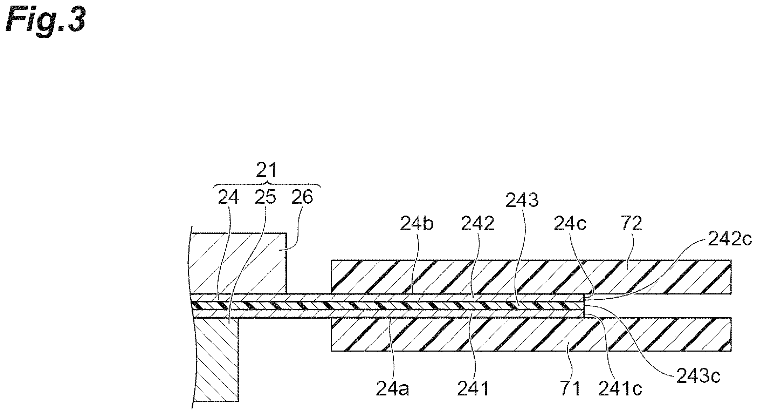

Next, a method for manufacturing a power storage device 1 will be described. First, as illustrated in FIG. 3, a bipolar electrode 21, a first sealing member 71, and a second sealing member 72 are prepared. Next, the first sealing member 71 is disposed on a first main face 24a that a current collector 24 has, and the second sealing member 72 is disposed on a second main face 24b that the current collector 24 has. The first sealing member 71 and the second sealing member 72 are each disposed so as to protrude from a side face 24c that the current collector 24 has. That is, when viewed from the stacking direction D, the first sealing member 71 disposed on the first main face 24a of the current collector 24 and the second sealing member 72 disposed on the second main face 24b of the current collector 24 each have a portion overlapping the current collector 24 and a portion not overlapping the current collector 24. When each of the first sealing member 71 and the second sealing member 72 is disposed so as to extend along the corresponding side of the current collector 24, the first sealing member 71 and the second sealing member 72 may be temporarily secured to the current collector 24 by spot welding using ultrasonic waves or heat, for example.

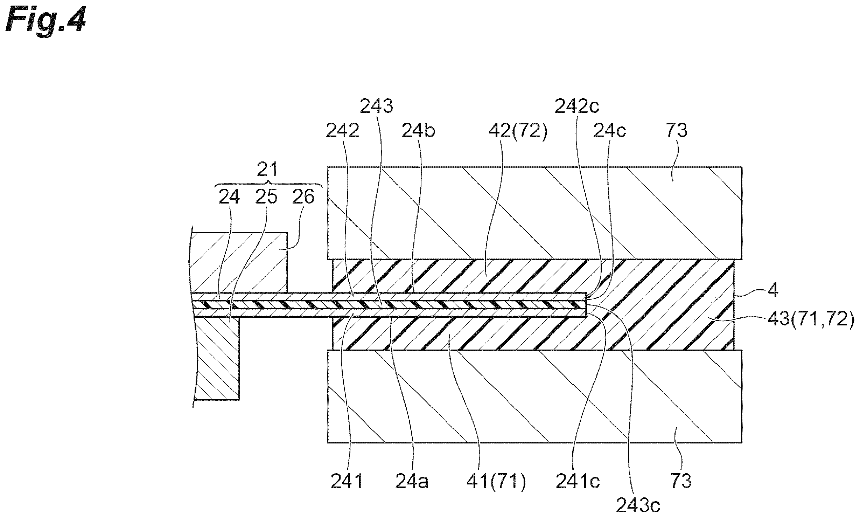

Next, as illustrated in FIG. 4, the first sealing member 71 and the second sealing member 72 are each heated by a pair of heaters 73. Further, the first sealing member 71 and the second sealing member 72 are each pressurized toward the current collector 24 by the pair of heaters 73. The pair of heaters 73 is, for example, an impulse sealer. Heating of the first sealing member 71 and the second sealing member 72 is performed with the current collector 24 sandwiched between the pair of heaters 73 through the first sealing member 71 and the second sealing member 72. The first sealing member 71 is heated until being melted. Similarly, the second sealing member 72 is heated until being melted. The first sealing member 71 and the second sealing member 72 heated until being melted are pressurized toward the current collector 24 by the pair of heaters 73. Thereafter, in response to stop of the heating by the pair of heaters 73, the first sealing member 71 and the second sealing member 72 are cooled, and accordingly, the first sealing member 71 and the second sealing member 72 are welded to the current collector 24. As a result, a portion of the first sealing member 71 overlapping the first main face 24a is welded to the first main face 24a to form a first seal portion 41, and a portion of the second sealing member 72 overlapping the second main face 24b is welded to the second main face 24b to form a third seal portion 42. Further, a portion of the first sealing member 71 located outside the side face 24c of the current collector 24 and a portion of the second sealing member 72 located outside the side face 24c of the current collector 24 are melted and compatible with each other to form a second seal portion 43. That is, a sealing member 4 is formed on the bipolar electrode 21. Similarly, each sealing member 4 is also formed on a positive terminal electrode 22 and a negative terminal electrode 23.

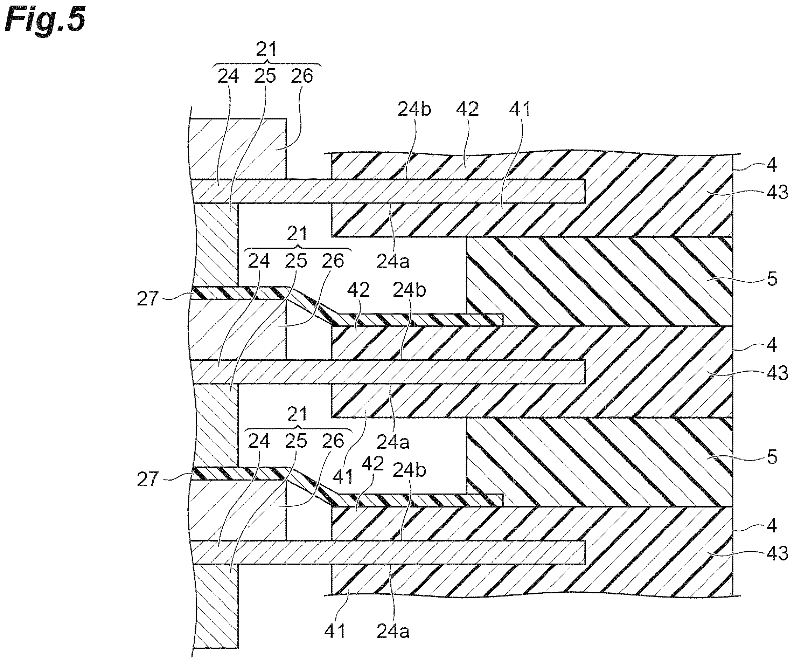

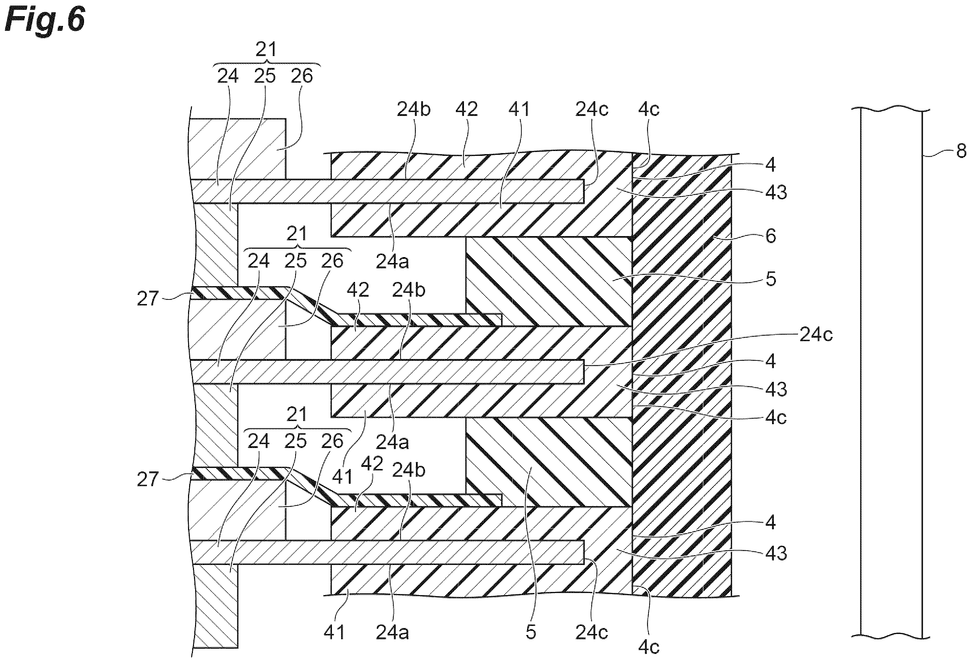

Next, as illustrated in FIG. 5, the bipolar electrode 21 with the sealing member 4 formed thereon, the positive terminal electrode 22 with the sealing member 4 formed thereon, the negative terminal electrode 23 with the sealing member 4 formed thereon, and each spacer 5 are stacked. Each spacer 5 is disposed between the corresponding sealing members 4. Next, as illustrated in FIG. 6, the respective outer side faces that the sealing members 4 and the spacers 5 have are melted by a heating device 8. The heating device 8 is, for example, an infrared heater. The heating device 8 irradiates the outer side faces of the sealing members 4 and the spacers 5 with infrared rays. As the outer side faces of the sealing members 4 and the spacers 5 are irradiated with the infrared rays, the respective temperatures of the sealing members 4 and the spacers 5 increase. The sealing members 4 and the spacers 5 are heated until the sealing member 4 and the spacer 5 are melted. As a result, the respective outer edges that the sealing members 4 and the spacers 5 have are melted. The melted outer edges of the sealing members 4 and the spacers 5 are solidified to form a welded portion 6. Next, an electrolytic solution is filled into each internal space S through the corresponding filling port. Next, the filling port is sealed. Accordingly, the power storage device 1 illustrated in FIG. 1 is manufactured.

As described above, in the power storage device 1, the current collector 24 includes the adhesive layer 243 that is provided between the first metal foil 241 and the second metal foil 242 and that bonds the first metal foil 241 and the second metal foil 242. The first seal portion 41 is welded to the first main face 24a of the current collector 24, and the second seal portion 43 is welded to the side face 24c of the current collector 24. Thus, heat in welding of the first seal portion 41 and the second seal portion 43 to the current collector 24 may be transferred to the adhesive layer 243. In particular, because the second seal portion 43 is in contact with the side face 243c of the adhesive layer 243, heat in welding of the second seal portion 43 to the current collector 24 is easily transferred to the adhesive layer 243. Here, the heat-resistant temperature of the adhesive layer 243 of the current collector 24 is higher than the respective melting points of the first seal portion 41 and the second seal portion 43. Thus, even if heat in welding of the first seal portion 41 and the second seal portion 43 to the current collector 24 is transferred to the adhesive layer 243, a decrease in adhesion strength by the adhesive layer 243 is inhibited. As a result, damage to the current collector 24 due to such a decrease in adhesion strength by the adhesive layer 243 is inhibited. Therefore, the power storage device 1 enables inhibition of damage to the bipolar electrode 21.

The power storage device 1 includes the spacers 5. Each spacer 5 is provided between such bipolar electrodes 21 as described above adjacent to each other in the stacking direction D, and is welded to the corresponding sealing member 4. The heat-resistant temperature of the adhesive layer 243 is higher than the melting point of the spacer 5. As a result, even if heat in welding of the spacer 5 to the sealing member 4 is transferred to the adhesive layer 243, a decrease in adhesion strength by the adhesive layer 243 is inhibited. Therefore, damage to the current collector 24 due to a decrease in adhesion strength by the adhesive layer 243 is inhibited, and as a result, damage to such a bipolar electrode 21 as described above is inhibited.

The sealing member 4 includes the third seal portion 42 welded to the second main face 24b of the current collector 24. The heat-resistant temperature of the adhesive layer 243 is higher than the melting point of the third seal portion 42. Thus, even if heat in welding of the third seal portion 42 to the current collector 24 is transferred to the adhesive layer 243, a decrease in adhesion strength by the adhesive layer 243 is inhibited. Therefore, damage to the current collector 24 due to a decrease in adhesion strength by the adhesive layer 243 is inhibited, and as a result, damage to the bipolar electrode 21 is inhibited.

The adhesive layer 243 contains the thermosetting resin. Thus, use of the thermosetting resin as a component of the adhesive layer 243 results in an increase of the heat-resistant temperature of the adhesive layer 243. Such use of the thermosetting resin as a component of the adhesive layer 243 results in inhibition of deformation of the adhesive layer 243 due to heating, and results in inhibition of deformation of the current collector 24. The sealing member 4 contains the thermoplastic resin. Thus, use of the thermoplastic resin as a component of the sealing member 4 results in enhancement of the adhesiveness of the sealing member 4 to the current collector 24 in welding of the sealing member 4 to the current collector 24, and results in enhancement of sealing performance by the sealing member 4.

The embodiments of the present disclosure are described above, but the present disclosure is not limited to the above-described embodiments.

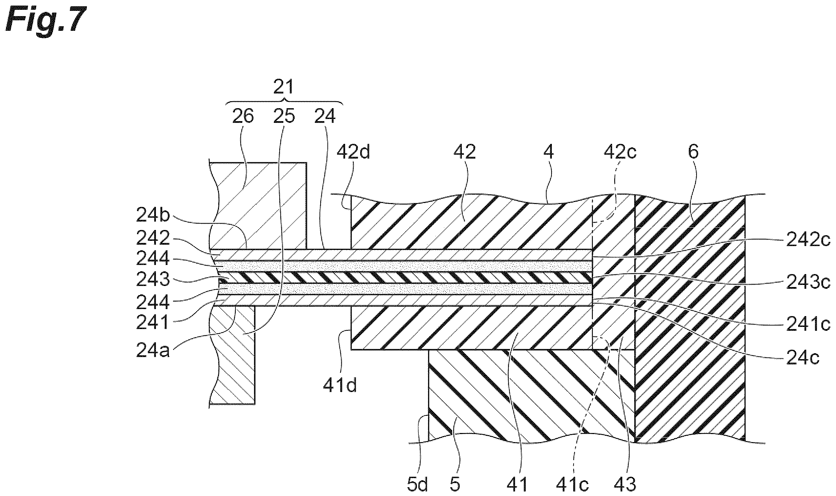

As illustrated in FIG. 7, a current collector 24 may further include carbon coat layers 244 each provided between a first metal foil 241 and an adhesive layer 243 and between a second metal foil 242 and the adhesive layer 243. Such a carbon coat layer 244 as described above is conductive. The carbon coat layer 244 contains, for example, a binder and graphite. The carbon coat layer 244 may be provided either between the first metal foil 241 and the adhesive layer 243 or between the second metal foil 242 and the adhesive layer 243. That is, the carbon coat layer 244 may be provided at least either between the first metal foil 241 and the adhesive layer 243 or between the second metal foil 242 and the adhesive layer 243. According to such a configuration, for example, as compared with a case where the first metal foil 241 or the second metal foil 242 directly bonded to the adhesive layer 243, the binder resin contained in the carbon coat layer 244 is more firmly bonded by the adhesive layer 243. Thus, the adhesion strength between the first metal foil 241 and the adhesive layer 243 or the adhesion strength between the second metal foil 242 and the adhesive layer 243 can be more reliably secured. Further, for example, even if pinholes are formed in the first metal foil 241, the second metal foil 242, or the adhesive layer 243, the liquid junction between internal spaces S adjacent to each other can be inhibited by the carbon coat layer 244. Note that the carbon coat layer 244 may be further provided on a first main face 24a or a second main face 24b that the current collector 24 has. In this case, the carbon coat layer 244 is also interposed between the first main face 24a and a first seal portion 41 or between the second main face 24b and a third seal portion 42.

In the embodiments, the description has been given focusing on the single bipolar electrode 21; however, the positive terminal electrode 22 or the negative terminal electrode 23 may be focused. When focusing on the negative terminal electrode 23, the second main face 24b of the current collector 24 of the negative terminal electrode 23 corresponds to a first main face, the first main face 24a of the current collector 24 of the negative terminal electrode 23 corresponds to a second main face, the layer including the second main face 24b of the current collector 24 corresponds to a first metal foil, and the layer including the first main face 24a corresponds to a second metal foil.

In the embodiments, an example in which the adhesive layer 243 contains the thermosetting resin has been described, but the adhesive layer 243 may contain a thermoplastic resin. In the case, the heat-resistant temperature of the adhesive layer 243 may be the melting point of the adhesive layer 243.

In the embodiments, an example in which the peripheral edge of the separator 27 is located between the sealing member 4 and the spacer 5 has been described, but the peripheral edge of the separator 27 may not reach the spacer 5. The peripheral edge of the separator 27 may be welded to the sealing member 4.

The gist of the present disclosure is as [1] to [5] below.
[1] A power storage device including: an electrode including: a current collector having a first main face; and an active material layer provided on the first main face; and a sealing member provided on a surface of the current collector, the sealing member surrounding the active material layer when viewed from a direction perpendicular to the first main face, in which the current collector includes: a first metal foil including the first main face; a second metal foil provided opposite to the active material layer with respect to the first metal foil; and an adhesive layer provided between the first metal foil and the second metal foil, the adhesive layer bonding the first metal foil and the second metal foil with each other, the sealing member includes: a first seal portion welded to the first main face; and a second seal portion welded to a side face of the current collector, the side face including a side face of the adhesive layer, and a heat-resistant temperature of the adhesive layer is higher than respective melting points of the first seal portion and the second seal portion.
[2] The power storage device according to [1] further including a spacer, in which the electrode is each of a plurality of electrodes stacked in a stacking direction, the spacer is provided between the electrodes adjacent to each other in the stacking direction, the spacer being welded to the sealing member, and the heat-resistant temperature of the adhesive layer is higher than a melting point of the spacer.
[3] The power storage device according to [1] or [2], in which the current collector has a second main face opposite to the first main face, the sealing member further includes a third seal portion welded to the second main face, and the heat-resistant temperature of the adhesive layer is higher than a melting point of the third seal portion.
[4] The power storage device according to any of [1] to [3], in which the adhesive layer contains a thermosetting resin, and the sealing member contains a thermoplastic resin.
[5] The power storage device according to any of [1] to [4], in which the current collector further includes a carbon coat layer provided at least either between the first metal foil and the adhesive layer or between the second metal foil and the adhesive layer.

### Reference Signs List

- 1: Power storage device

- 4: Sealing member
- 5: Spacer
- 21: Bipolar electrode
- 22: Positive terminal electrode
- 23: Negative terminal electrode
- 24: Current collector
- 24a: First main face
- 24b: Second main face
- 25: Positive active material layer
- 26: Negative active material layer
- 41: First seal portion
- 42: Third seal portion
- 43: Second seal portion
- 241: First metal foil
- 242: Second metal foil
- 243: Adhesive layer
- 244: Carbon coat layer

## Claims

1. A power storage device comprising:
an electrode including a current collector having a first main face, and an active material layer provided on the first main face; and
a sealing member provided on a surface of the current collector, the sealing member surrounding the active material layer when viewed from a direction perpendicular to the first main face,
wherein the current collector includes a first metal foil including the first main face, a second metal foil provided opposite to the active material layer with respect to the first metal foil, and an adhesive layer provided between the first metal foil and the second metal foil, the adhesive layer bonding the first metal foil and the second metal foil with each other,
the sealing member includes a first seal portion welded to the first main face, and a second seal portion welded to a side face of the current collector including a side face of the adhesive layer, and
a heat-resistant temperature of the adhesive layer is higher than respective melting points of the first seal portion and the second seal portion.

2. The power storage device according to claim 1 further comprising a spacer,
wherein the electrode is each of a plurality of electrodes stacked in a stacking direction,
the spacer is provided between the electrodes adjacent to each other in the stacking direction, the spacer being welded to the sealing member, and
the heat-resistant temperature of the adhesive layer is higher than a melting point of the spacer.

3. The power storage device according to claim 1 or 2,
wherein the current collector has a second main face opposite to the first main face, and the sealing member further includes a third seal portion welded to the second main face, and
the heat-resistant temperature of the adhesive layer is higher than a melting point of the third seal portion.

4. The power storage device according to claim 1 or 2,
wherein the adhesive layer contains a thermosetting resin, and
the sealing member contains a thermoplastic resin.

5. The power storage device according to claim 1 or 2, wherein the current collector further includes a carbon coat layer provided at least either between the first metal foil and the adhesive layer or between the second metal foil and the adhesive layer.
